# EUROPEAN PATENT SPECIFICATION

(11) **EP 4 051 916 B1**
(45) Date of publication and mention of the grant of the patent: **03.12.2025**
(21) Application number: 20882918.4
(22) Date of filing: 30.10.2020
(51) Int. Cl.: F16B 45/02

(54) **PERSONAL FALL PROTECTION DEVICE WITH OPENABLE CAPTIVE EYE AND LOCK MECHANISM**
PERSÖNLICHE FALLSCHUTZVORRICHTUNG MIT ZU ÖFFNENDER UNVERLIERBARER ÖSE UND VERRIEGELUNGSVORRICHTUNG
DISPOSITIF DE PROTECTION CONTRE LES CHUTES DE PERSONNES DOTÉ D'UN OEILLET CAPTIF

(30) Priority: 02.11.2019 IN 201911044493
(43) Date of publication of application: 07.09.2022
(73) Proprietor: KARAM SAFETY PRIVATE LIMITED, Sitarganj-262405, Uttarakhand (IN)
(72) Inventor: NIGAM, Rajesh, Lucknow 226008 (IN)
(74) Representative: do Nascimento Gomes, Rui
(86) International application number: PCT/IB2020/060219
(87) International publication number: WO 2021/084499

(56) References cited:
- CA-A1- 2 457 914
- DE-A1- 19 732 204
- GB-A- 2 387 617
- US-A- 1 411 549
- US-A- 2 116 880
- US-A1- 2015 096 154

## Description

### FIELD OF THE INVENTION

The present invention generally relates to a fall resistant device and more particularly to a personal fall protection device.

### BACKGROUND OF THE INVENTION

It is difficult for workers to work at heights where they run a risk to their lives. Many workers lose their lives or meet with serious injuries while working on extreme heights. A Personal fall resistant or prevention system becomes a necessity in such cases. A rebar hook also referred to as a snap hook is the most important part of such personal fall resist system that prevents such mishaps.

GB2387617A discloses a karabiner comprising a hooked body defining a loop closable by a pivoted arm which is biased to close the loop and which is self-latching by means of a spring-loaded pin locating in a recess of the arm and having a cap to enable the pin to be withdrawn to open the karabiner. The karabiner requires the double action of withdrawing the pin and pivoting the arm, both against spring action, and the arm is returned automatically to its locked position when released. The karabiner has the advantage of being operated using one hand.

US10066660 discloses a snap hook assembly with a hook body which comprises of neck portion through which the hook portion of the snap hook extends. The snap hook device further comprises a gate mounted pivotally to the hook body, a trigger mounted to the hook body, a trigger biasing member and a gate biasing member. The hook body comprises a neck portion and a hook portion extending from the neck portion. A locking arm extending from the end of the hook portion towards the neck portion which defines a capture area. The body of the snap hook assembly includes a connecting ring at a bottom end to which a lifeline can be connected.

US8752254 illustrates a snap hook wherein the body of the snap hook includes a hooked shaped mid portion positioned between a nose portion and a connection portion. The body further has an opening to an inner edge that is positioned between the nose end and the connection portion. A gate has a first end pivotally coupled proximate to the connected portion of the body and a second end configured and arranged to engage the nose portion of the body to selectively close an opening in the body. A locking member has a first end that is selectively received in a slot in the nose portion of the body. A trigger has an end that engages a second end of the locking member to disengage the first end of the locking member from the slot of the nose portion of the body.

In these aforesaid snap hooks, the lanyard is permanently stitched to the eye of the hooks. Hence in case of fall arrest with these hooks and lanyard assembly, user is advised to discard the whole system (i.e. Lanyard as well as Hook) as lanyard gets deployed and cannot be replaced on site without stitching facility.

EP3001046 illustrates a device having a snap-hook with lanyard attachment that suffices to remove the spacer after unscrewing and removing the screw. The access space is then free, allowing the introduction a loop of the tether within the ring. The reclosing of the spacer imprisons the tether in the ring closed.

The rebar or snap hook device used currently experience a maximum of 23 kN fall arrest forces with an energy absorbing lanyard not exceeding 6kN, however, the hooks are designed to take a load of at least 23kN without failure.

Thus, there is a need for a snap hook which enables reusability of the hook. The present invention provides one such rebar/ snap hook with Openable captive eye.

### OBJECT OF THE INVENTION

The main object of the present invention is to provide a personal fall arrest system in the form of rebar or/and snap hook with an openable captive eye thereby allowing the hook to be reused.

Another object of the present invention is the captive eye design of the hook thereby allowing it to be opened from one end by gate when required to change the existing fitted lanyard. The lanyard can be inserted into the fall arrest system and can be changed without changing the whole assembly.

Yet, another object of the present invention is to introduce a dismountable gate mechanism providing tamper proof protection ensuring additional safety of the user.

Other objects and advantages of the present invention will become apparent from the following description taken in connection with the accompanying drawings, wherein, by way of illustration and example, the aspects of the present invention are disclosed.

### SUMMARY OF THE INVENTION

The main aspect of the present invention is a part of personal fall protection system i.e. rebar/ snap hook with openable captive eye of the hook implemented by employing one-way gate mechanism designed such that the gate is hinged at a fixed end. The gate mechanism enabled to dispose perpendicularly from the fixed end and can be opened from the other end by the gate when required to change the existing lanyard fitted to it.

Another aspect of the present invention is the mechanism of opening and placement of the captive eye. The captive eye of the snap hook is placed at the bottom of the hook and is open from one side. The opening of the captive eye has a hinged gate which is pivoted by a rivet at the lower end thereby allowing the gate to move outwards up to an angle of 90°.

### BRIEF DESCRIPTION OF THE DRAWINGS

The present invention will be better understood after reading the following detailed description of the presently preferred aspects thereof with reference to the appended drawings, in which:
Fig. 1 illustrates the Personal Fall protection system with openable eye with open gate (100); and
Fig. 2 illustrates the Personal Fall protection system with openable eye in fastened gate (500).
Fig. 3 illustrates an alternate embodiment of Personal Fall protection system (300) having circular shaped hook body (301) (O-ring), in open **[****Figure 3(b)****]** and closed **[****Figure 3(a)****]** conditions of gate.
Fig. 4 illustrates an alternate embodiment of Personal Fall protection system (400) having semicircular/D shaped hook body or D-ring (401) , in open **[****Figure 4(b)****]** and closed **[****Figure 4(a)****]** conditions of gate.

### DETAILED DESCRIPTION OF THE INVENTION

The following description describes various features and functions of the disclosed product with reference to the accompanying figures. In the figures, similar symbols identify similar components, unless context dictates otherwise. The illustrative aspects described herein are not meant to be limiting. It may be readily understood that certain aspects of the disclosed product can be arranged and combined in a wide variety of different configurations, all of which are contemplated herein.

These and other features and advantages of the present invention may be incorporated into certain embodiments of the invention and will become more fully apparent from the following description and claims or may be learned by the practice of the invention as set forth hereinafter.

Accordingly, those of ordinary skill in the art will recognize that various changes and modifications of the embodiments described herein can be made without departing from the scope of the invention, which is defined by the appended claims. In addition, descriptions of well-known functions and constructions are omitted for clarity and conciseness.

The terms and words used in the following description and claims are not limited to the bibliographical meanings, but, are merely used to enable a clear and consistent understanding of the invention. Accordingly, it should be apparent to those skilled in the art that the following description of exemplary embodiments of the present invention are provided for illustration purpose only and not for the purpose of limiting the invention.

It is to be understood that the singular forms "a," "an," and "the" include plural referents unless the context clearly dictates otherwise.

It should be emphasized that the term "comprises/comprising" when used in this specification is taken to specify the presence of stated features, integers, steps or components but does not preclude the presence or addition of one or more other features, integers, steps, components or groups thereof.

It should be clear that the components having similar functionality are mentioned as different referral numerals in the alternate embodiments.

One aspect of the present invention is a fall protection rebar/ snap hook with openable captive eye (200) designed to be opened from one end by gate when required to change the existing lanyard fitted to it.

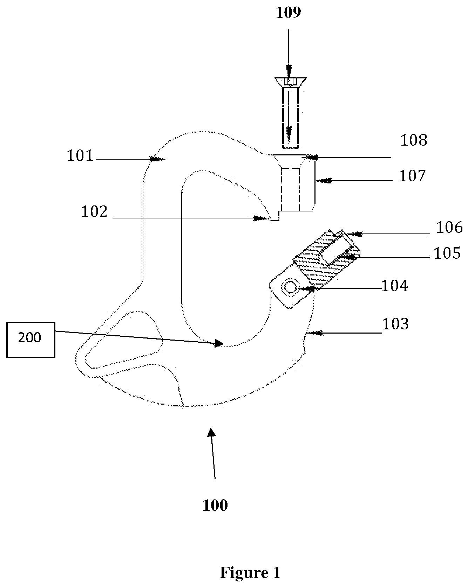

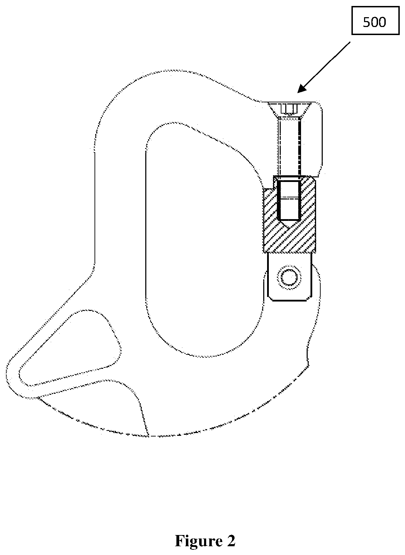

Figures 1 & 2 illustrate a personal fall protection device (100) with an openable captive eye (200) in two states, the personal fall protection device (100) comprising a hook body (101) disposed/enclosed within a plurality of ends (103, 107), wherein (107) is an anterior end and (103) is a posterior end, a hinged gate (106),an internal cavity with threads (105) provisioned within the hinged gate (106), tightening device (109) and a conical seat (108). The personal fall protection device (100) also comprises a small protrusion at the opening of the captive eye (200) referred to as one-way blocker (102).

Figure 1 illustrates the personal fall protection device (100) with an openable captive eye (200) i.e. an open state. The fastening means/rivet/pivot (104) is positioned laterally and proximal to the posterior end (103) to enable the movement of the hinged gate (106) pivoted at the fastening means/rivet/pivot (104).The tightening device (109) is withdrawn from the conical seat (108) as observed from the Figure 1. The hinged gate (106) pivoted at a fastening means/pivot/rivet (104) is displaced in the direction opposite to the direction of the captive eye (200).

In operation, a lanyard (not shown in the Figures 1 & 2) needs to be fitted into the personal fall protection device (100). In Figure 2, the embodiment illustrates hinged gate (106) aligned such that the internal cavity (105) is positioned to fit- in with the tightening device (109) and lock the personal fall protection device (100). The hinged gate (106) is angularly displaced on the fastening means/rivet/pivot (104) in the direction of the captive eye (200) opposite to the direction the hinged gate (106) is situated as shown in Figure 1. The hinged gate (106) laterally aligns with the anterior end (107) after angular displacement of certain degrees until the motion is halted by the one way blocker (102). The tightening device (109) is lowered in the conical seat (108) and further into the internal cavity with threads (105) until the complete dimensional length of the fastening means/corkscrew (109) is disposed within the internal cavity with the thread (105).

The hook body is opened when required to change the existing lanyard. The gate and lock are spring operated and designed in such a way that the gate cannot be opened without releasing the lock.

The hook body (101) in the personal fall protection device (100) of the present invention is in the shape of curvature with a fastening means (104) and is fixed at the posterior end (103). A hinged gate (106) is connected to the posterior end (103) with a fastening means (104). The hinged gate (106) includes an internal cavity (105) to fit- in with the tightening device (109) and lock the personal fall protection device (100). The anterior end (107) of the hook body (101) ends with a one- way blocker to affix the gate in locked state and comprises a conical seat (108) wherein the tightening device (109) fits in with the internal cavity (105) of the hinged gate (106) to be in a locked position.

The hook body may be fabricated with alloy/steel alloy, forged steel, stainless steel, brass, die case zinc and malleable iron materials.

The lanyard is fitted into the personal fall protection device (100) and locked via the closure mechanism. The captive eye (200) of the hook is opened from one of the ends by hinged gate (106) and fixed from the other end. The hook body is opened when required to change the existing lanyard. The gate and lock are spring operated and designed in such a way that the gate cannot be opened without releasing the lock.

The opening of the captive eye hinged gate (106) is pivoted by fastening means (104) at the posterior end (103) and this mechanism enables the gate (106) to move outwards perpendicular to the affixed position.

Another aspect of the present invention is the captive eye (200) locking mechanism which enables strong and safe locking of a stopper profile at anterior end of the eye opening of the hook body restricting the movement of the gate. In the mechanism, the hinged gate (106) including an internal cavity (105) with threads, is fixed to the posterior end (103) of the hook body (101) via fastening means (104). A one- way blocker (102) and a conical seat (108) are in the anterior end (107) of the hook body (101). The captive eye (200) of the hook is opened at one of its end by hinged gate (106) to insert the lanyard. A tightening device (109) is fitted in the internal cavity (105) with thread of the hinged gate (106) to lock the hook. The gate and lock are spring operated and designed in such a way that gate cannot be opened without releasing the lock.

Figure 1 illustrates personal fall protection device (100) of the present invention in an open gate state. The hook body (101) of the fall protection device is preferably made up of metal alloy with eye at bottom profile for connection with lanyard

Figure 2 illustrates the personal fall protection device (100) of the present invention in closed gate state. The locked hook state illustrates the locked position of the captive eye (200) of the hook after the lanyard is inserted.

In order to change the lanyard of the personal fall protection device, the tightening device (109) is required to be unscrewed with a suitable key mechanism and then the hinged gate (106) is pushed outwards. The loop of defective rope is taken out and replaced with a new loop. The hinged gate (106) is then pushed back with force until it hits the one- way blocker and aligns with hole on anterior end (107) of eye opening to allow the tightening device (109) to be put to latch the gate.

In alternate embodiments 300 & 400, the personal fall protection device may be incorporated with multiple ring structures i.e. the hook body may be circular (O-ring), semicircular/D shaped (D-ring), swivel ring or any other closed structure that can be used as an interconnection between various components i.e. Harness, Lanyard, etc. Thus, the openable captive eye (200) may be circular (O-ring), semicircular (D-ring), swivel ring or any other closed shape.

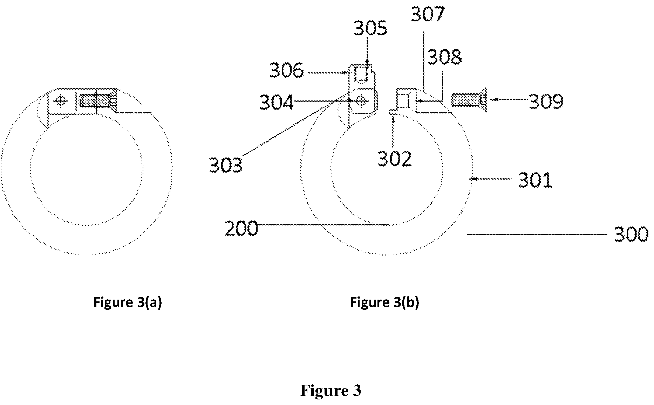

One of the alternate embodiments illustrates the personal fall protection device (300) having circular shaped hook body (301) with an openable captive eye (200) i.e. an open state [Figure 3(b)]. The fastening means/rivet/pivot (304) is positioned tangentially and proximal to the posterior end (303) to enable the movement of the hinged gate (306) pivoted at the fastening means/rivet/pivot (304).The tightening device (309) is withdrawn from the conical seat (308) as observed from the Figure 3. The hinged gate (306) pivoted at a fastening means/pivot/rivet (304) is displaced in the direction opposite to the direction of the captive eye (200).

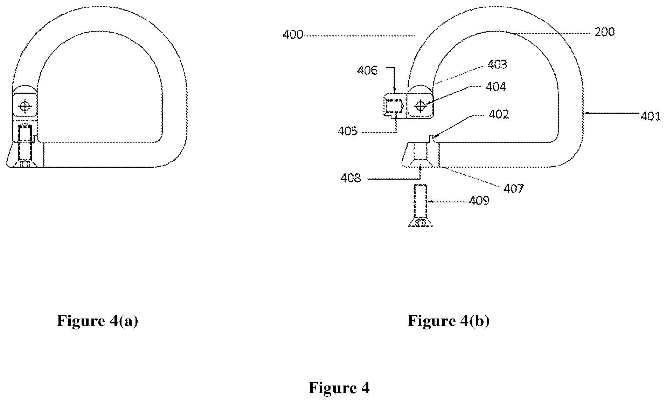

One of the alternate embodiments illustrates the Personal fall protection device (400) having semicircular/D shaped hook body (401) with an openable captive eye (200) i.e. an open state [Figure 4(b)]. The fastening means/rivet/pivot (404) is positioned longitudinally and proximal to the posterior end (403) to enable the movement of the hinged gate (406) pivoted at the fastening means/rivet/pivot (404).The tightening device (409) is withdrawn from the conical seat (408) as observed from the Figure 4. The hinged gate (406) pivoted at a fastening means/pivot/rivet (404) is displaced in the direction opposite to the direction of the captive eye (200).

While the present invention has been described with reference to one or more preferred aspects, which aspects have been set forth in considerable detail for the purposes of making a complete disclosure of the invention, such aspects are merely exemplary and are not intended to be limiting or represent an exhaustive enumeration of all aspects of the invention. The scope of the invention, therefore, shall be defined solely by the following claims. Further, it will be apparent to those of skill in the art that numerous changes may be made in such details without departing from the scope of the invention as defined by the appended claims.

## Claims

1. A personal fall protection device (100) with openable captive eye (200), comprising:
a hook body (101) with a plurality of ends (103,107) located at its anterior and posterior position;
a fastening means (104) to hold a hinged gate (106) structure in place;
a hinged gate (106) with an internal cavity (105) to affix a tightening device (109), the hinged gate (106) being connected to the hook body (101) at the posterior end (103) with the fastening means (104);
wherein the device (100 further comprises a conical seat (108) for inserting the tightening device (109);
and
the hinged gate (106) with the internal cavity (105) allows the tightening device (109) to enter the conical seat (108) at the anterior end (107) of the hook body (101) ending with a one-way blocker (102).

2. The personal fall protection device (100) as claimed in claim 1, wherein the hinged gate (106) is pivoted by the fastening means (104) at the posterior end (103) enables the gate (106) to move perpendicularly outward.

3. The personal fall protection device (100) as claimed in claim 1, wherein the one-way blocker (102) restricts the movement of the hinged gate (106) and aligns the internal cavity (105) with the hole in the anterior end (107) of the hook body (101).

4. The personal fall protection device (100) as claimed in claim 1, wherein the hook body (101) may be circular (O-ring), semicircular (D-ring), swivel ring or any other closed structure that can be used as an interconnection between various components.

5. A captive eye (200) locking mechanism, the mechanism comprising the steps wherein:
a hinged gate (106) including an internal cavity (105) connected to posterior end (103) of hook body (101) via a fastening means (104);
a one-way blocker (102) in the anterior end (107) of the hook body (101);
the hinged gate (106) is opened at one of the ends to insert lanyard,
**characterized in that**
a conical seat (108) is provided in the anterior end (107) of the hook body (101), wherein a tightening device (109) is fitted through the conical seat and in the internal cavity (105) of the hinged gate (106) to latch the hook.

6. The captive eye (200) locking mechanism as claimed in claim 5, wherein the hinged gate (106) pivoted by the fastening means (104) at the posterior end (103) enables the hinged gate (106) to move perpendicularly outwards.

7. The captive eye (200) locking mechanism as claimed in claim 5, wherein the openable captive eye may be circular (O-ring), semicircular (D-ring), swivel ring or any other closed shape.

8. The captive eye (200) locking mechanism as claimed in claim 5, wherein the one-way blocker (102) restricts the movement of the hinged gate (106) and aligns the internal cavity (105) with the hole in the anterior end (107) of the hook body (101) wherein the tightening device (109) fits in to the conical seat (108).

## Patentansprüche

1. Persönliche Absturzsicherungseinrichtung (100) mit zu öffnender Captive Eye (200), umfassend:
einen Hakenkörper (101) mit einer Vielzahl von Enden (103, 107), die sich an seiner vorderen und hinteren Position befinden;
ein Befestigungsmittel (104), um eine schwenkbare Klappe (106) in Position zu halten; eine schwenkbare Klappe (106) mit einem inneren Hohlraum (105), um eine Spannvorrichtung (109) zu befestigen, wobei die schwenkbare Klappe (106) mit dem Hakenkörper (101) an dem hinteren Ende (103) mit dem Befestigungsmittel (104) verbunden ist;
wobei
die Einrichtung (100) ferner einen konischen Sitz (108) zum Einsetzen der Spannvorrichtung (109) umfasst;
und
die schwenkbare Klappe (106) mit dem inneren Hohlraum (105) ermöglicht es der Spannvorrichtung (109), in den konischen Sitz (108) am vorderen Ende (107) des Hakenkörpers (101) einzutreten, der mit einem Einwegblocker (102) endet .

2. Persönliche Absturzsicherungseinrichtung (100) nach Anspruch 1, wobei die schwenkbare Klappe (106) durch das Befestigungsmittel (104) am hinteren Ende (103) geschwenkt wird, so dass sich die Klappe (106) senkrecht nach außen bewegen kann.

3. Persönliche Absturzsicherungseinrichtung (100) nach Anspruch 1, wobei der Einwegblocker (102) die Bewegung des schwenkbaren Klappe (106) einschränkt und den inneren Hohlraum (105) mit dem Loch im vorderen Ende (107) des Hakenkörpers (101) ausrichtet.

4. Persönliche Absturzsicherungseinrichtung (100) nach Anspruch 1, wobei der Hakenkörper (101) kreisförmig (O-Ring), halbkreisförmig (D-Ring), Schwenkring oder eine andere geschlossene Struktur sein kann, die als Verbindung zwischen verschiedenen Komponenten verwendet werden kann.

5. Verriegelungsmechanismus mit Captive Eye (200), wobei der Mechanismus die folgenden Schritte umfasst:
eine schwenkbare Klappe (106) mit einem inneren Hohlraum (105), die mit dem hinteren Ende (103) des Hakenkörpers (101) über ein Befestigungsmittel (104) verbunden ist;
einen Einwegblocker (102) im vorderen Ende (107) des Hakenkörpers (101);
die schwenkbare Klappe (106) wird an einem der Enden geöffnet, um Schlüsselband einzuführen,
**dadurch gekennzeichnet, dass**
ein konischer Sitz (108) im vorderen Ende (107) des Hakenkörpers (101) vorgesehen ist, wobei eine Spannvorrichtung (109) durch den konischen Sitz und in den inneren Hohlraum (105) der schwenkbare Klappe (106) eingesetzt ist, um den Haken zu verriegeln.

6. Verriegelungsmechanismus mit Captive Eye (200) nach Anspruch 5, wobei die schwenkbare Klappe (106), die durch das Befestigungsmittel (104) am hinteren Ende (103) schwenkbar gelagert ist, eine senkrechte Bewegung des schwenkbaren Klappe (106) nach außen ermöglicht

7. Verriegelungsmechanismus mit Captive Eye (200) nach Anspruch 5, wobei das zu öffnender Captive Eye kreisförmig (O-Ring), halbkreisförmig (D-Ring), Schwenkring oder eine andere geschlossene Form sein kann.

8. Verriegelungsmechanismus mit Captive Eye (200) nach Anspruch 5, wobei der Einwegblocker (102) die Bewegung des schwenkbaren Klappe (106) einschränkt und den inneren Hohlraum (105) mit dem Loch im vorderen Ende (107) des Hakenkörpers (101) ausrichtet, wobei die Spannvorrichtung (109) in den konischen Sitz (108) passt.

## Revendications

1. Dispositif de protection individuelle contre les chutes (100) à œil captif ouvrable (200), comprenant :
un corps de crochet (101) ayant une pluralité d'extrémités (103, 107) situées à ses positions antérieure et postérieure ;
un moyen de fixation (104) pour maintenir en place une structure de doigt articulé (106) ;
un doigt articulé (106) avec une cavité interne (105) permettant de fixer un dispositif de serrage (109), le doigt articulé (106) étant relié au corps de crochet (101) à l'extrémité postérieure (103) à l'aide du moyen de fixation (104) ;
dans lequel
le dispositif (100) comprend en outre un siège conique (108) pour insérer le dispositif de serrage (109) ;
et
le doigt articulé (106) avec la cavité interne (105) permet au dispositif de serrage (109) d'entrer dans le siège conique (108) à l'extrémité antérieure (107) du corps de crochet (101) se terminant en un élément de blocage unidirectionnel (102).

2. Dispositif de protection individuelle contre les chutes (100) selon la revendication 1, dans lequel le doigt articulé (106) est pivoté par le moyen de fixation (104) à l'extrémité postérieure (103), permettant au doigt (106) de se déplacer perpendiculairement vers l'extérieur.

3. Dispositif de protection individuelle contre les chutes (100) selon la revendication 1, dans lequel l'élément de blocage unidirectionnel (102) limite le mouvement du doigt articulé (106) et aligne la cavité interne (105) avec le trou à l'extrémité antérieure (107) du corps de crochet (101).

4. Dispositif de protection individuelle contre les chutes (100) selon la revendication 1, dans lequel le corps de crochet (101) peut être circulaire (anneau en O), semi-circulaire (anneau en D), pivotant ou de toute autre structure fermée pouvant être utilisée comme une interconnexion entre divers composants.

5. Mécanisme de verrouillage à œil captif (200), le mécanisme comprenant les étapes suivantes :
un doigt articulé (106) comprenant une cavité interne (105) relié à l'extrémité postérieure (103) du corps de crochet (101) à l'aide d'un moyen de fixation (104) ;
un élément de blocage unidirectionnel (102) à l'extrémité antérieure (107) du corps de crochet (101) ;
le doigt articulé (106) est ouvert à l'une des extrémités pour insérer une longe,
**caractérisé en ce que**
un siège conique (108) est prévu à l'extrémité antérieure (107) du corps de crochet (101), où un dispositif de serrage (109) est inséré à travers le siège conique et dans la cavité interne (105) du doigt articulé (106) pour verrouiller le crochet.

6. Mécanisme de verrouillage à œil captif (200) selon la revendication 5, dans lequel le doigt articulé (106) pivoté par le moyen de fixation (104) à l'extrémité postérieure (103) permet au doigt articulé (106) de se déplacer perpendiculairement vers l'extérieur.

7. Mécanisme de verrouillage à œil captif (200) selon la revendication 5, dans lequel l'œil captif ouvrable peut être circulaire (anneau en O), semi-circulaire (anneau en D), pivotant ou de toute autre forme fermée.

8. Mécanisme de verrouillage à œil captif (200) selon la revendication 5, dans lequel l'élément de blocage unidirectionnel (102) limite le mouvement du doigt articulé (106) et aligne la cavité interne (105) avec le trou à l'extrémité antérieure (107) du corps de crochet (101), où le dispositif de serrage (109) s'insère dans le siège conique (108).
